# EUROPÄISCHE PATENTANMELDUNG

(11) **EP 0 939 540 A2**
(43) Veröffentlichungstag der Anmeldung: **01.09.1999**
(21) Anmeldenummer: 99103427.3
(22) Anmeldetag: 23.02.1999
(51) Int. Cl.: H04M 15/00, H04M 15/28

(54) **Router für eine Auswahl von Übertragungswegen für Telefongespräche**

(30) Priorität: 26.02.1998 DE 29803342 U
(71) Anmelder: TELEFONAKTIEBOLAGET LM ERICSSON (publ), 126 25 Stockholm (SE)
(72) Erfinder: Walter, Andre, 52134 Herzogenrath (DE)
(74) Vertreter: Mohsler, Gabriele

(57) **Zusammenfassung**

Die Erfindung betrifft ein Verfahren für ein Routing von wenigstens einem Telefongespräch. Erfindungsgemäß zeichnet sich das Verfahren dadurch aus, dass in Abhängigkeit von einer von einem Anrufer gewählten Nummer eines anzurufenden Telefonanschlusses ein Übertragungsweg für das Telefongespräch ausgewählt wird und dass innerhalb eines Telefons oder einer mit dem Telefon verbundenen Telekommunikationsanlage durch eine Optimierungsfunktion der günstigste Netzanbieter ausgewählt wird, wobei die Optimierungsfunktion mit Informationen aus einer Datenbank eines Service-Zentrums (S) arbeitet.

Die Erfindung betrifft ferner einen Router für eine Auswahl von Übertragungswegen für Telefongespräche, die von einem Telefon und/oder einer Telefonanlage ausgehen. Erfindungsgemäß zeichnet sich der Router dadurch aus, dass das Telefon und/oder die Telefonanlage ein Mittel zur Auswahl des günstigsten Netzanbieters enthält und dass das Mittel eine Teilmenge von in einem Servicezentrum (S) gespeicherten Entfernungs- und/oder Tarifdaten von Netzbetreibern enthält.

## Beschreibung

Die Erfindung betrifft ein Verfahren für ein Routing von Wenigstens einem Telefongespräch.

Die Erfindung betrifft ferner einen Router für eine Auswahl von Übertragungswegen für Telefongespräche, die von einem Telefon und/oder einer Telefonanlage geführt werden.

Verfahren für das Routing von Ferngesprächen und Router für die Durchführung des Verfahrens sind sowohl für Sprachkanäle als auch für Datenkanäle in verschiedenen Telekommunikationssystemen geeignet. Bei den Telekommunikationssystemen kann es sich sowohl um leitungsgebundene als auch um mobile Systeme handeln.

Routing im Sinne der Erfindung bezeichnet ein Ermitteln und/oder Auswählen eines geeigneten Übertragungsweges für eine oder mehrere Nachrichten. Zur Durchführung des Routings werden Router eingesetzt. Router sind Mittel zum Auswahlen von wenigstens einem Übertragungsweg aus einer Vielzahl von möglichen Übertragungswegen zur Übermittlung der Nachricht.

Ein gattungsgemäßes Verfahren und ein gattungsgemäßer Router sind aus der internationalen Patentanmeldung WO 98/08335 bekannt. Das bekannte Verfahren und der bekannte Router erlauben eine Optimierung von Übertragungswegen in einem Call-by-Call-Dienst. Der Router nach WO 98/08335 besteht aus einem lokalen Computer und einer zentralen Datenbank. Der lokale Computer ist zwischen einer Telefonanlage und einer zentralen Vermittlungsstelle eines Telefonnetzes geschaltet. Der lokale Computer überwacht ständig die Telefonleitung und überprüft, ob ein Verbindungsaufbau getätigt wird. Falls eine Verbindung aufgebaut wird, unterbricht der lokale Computer die leitung und sendet einen simulierten Freiton zum Telefon. Durch Einwahl in das Netz erfolgt ein Routing für den lokalen Computer.

Call-by-Call-Dienste ermöglichen es, unabhängig von einem Heimatnetzwerk oder einem Mobilfunkanbieter, über den standardmäßigen Telefongesprächen übertragen werden, Übertragungswege anderer Anbieter zu nutzen. So besteht beispielsweise seit dem 01.01.1998 in der Bundesrepublik Deutschland die Möglichkeit, im Festnetz über eine Netzvorwahl (010XX) in ein anderes Netz einzuwählen. Call-by-Call ist im Mobilfunkbereich technisch gleichermaßen möglich. Eine Vielfalt von Tarifen macht es für Benutzer sehr schwierig, zu jeder Zeit für seine Anrufe den jeweils günstigsten Netzanbieter zu ermitteln.

Ein weiteres System für ein Least Cost Routing, wie es ist in der Zeitschrift "Funkschau", Heft 3, 1998, S. 23, beschrieben ist, wurde von der Technischen Universität Dresden entwickelt. Dieses System beinhaltet einen aktiven Router, der Aktualisierungen von Daten aktiv aus dem Netz holt. Hierzu werden innerhalb des Netzes ständig Tarifdaten übermittelt. Der Router ist in ständiger Empfangsbereitschaft, so dass er die Aktualisierung empfangen kann.

Von dem Hersteller ComTel wurde eine Telefonanlage entwickelt, die in ein Computernetzwerk integriert ist. Funkschau, Heft 3, 1998, S. 24 - 26. Hierbei enthält die Telefonanlage einen Algorithmus zum fast Cost Routing, der regelmäßig Aktualisierungen von einer Web-Seite lädt. Die Web-Seite wird wiederum von einem Provider gewartet und aktualisiert. Dieses System setzt eine Anbindung der Telefonanlage an ein Computernetzwerk voraus und ist daher verhältnismäßig aufwendig.

Der Erfindung liegt die Aufgabe zugrunde, ein Verfahren für ein Routing von wenigstens einem Telefongespräch zu entwickeln, das möglichst einfach durchgeführt werden kann. Insbesondere soll dieses Verfahren auch von privaten Benutzem eingesetzt werden können.

Erfindungsgemäß wird diese Aufgabe gelöst durch das Verfahren nach Anspruch 1, den Router nach Anspruch 19, das Telefon nach Anspruch 21 und die Telefonanlage nach Anspruch 22.

Die Erfindung sieht vor, dass ein Verfahren für ein Routing von wenigstens einem Telefongespräch so durchgeführt wird, dass in Abhängigkeit von einer von einem Anrufer gewählten Nummer eines anzurufenden Telefonanschlusses ein Übertragungsweg für das Telefongespräch ausgewählt wird und dass mittels des Telefons oder der mit ihm verbundenen Telekommunikationsanlage durch eine Optimierungsfunktion der günstigste Netzanbieter ausgewählt wird, wobei die Optimierungsfunktion mit Informationen aus einer Datenbank eines Service-Zentrums arbeitet.

Die Erfindung sieht ferner vor, eine Telefonkostenoptimierung durch Routing von Telefongesprächen im Bereich eines Telefons oder einer Telefonanlage durchzuführen und hierbei auf eine ausgewählte Datenbasis zurückgreifen, die lokal gespeichert ist. Die lokal gespeicherten Informationen werden benutzerspezifisch ausgewählt. Während ein externes Servicezentrum umfassende Daten, insbesondere Tarifdaten, enthält, basiert die Optimierung im Bereich des Telefons und/oder der Telefonanlage auf ausgewählten Daten.

Beispielsweise wird das Routing so durchgeführt, dass der günstigste Anbieter ausgewählt wird, wobei der Anbieter als der günstigste eingestuft wird, dessen Tarife am niedrigsten sind.

Günstigster Anbieter im Sinne der Erfindung kann aber auch ein Anbieter sein, dessen Tarife nicht am niedrigsten sind, der jedoch andere vorteilhafte Servicemerkmale, wie beispielsweise eine hohe Übertragungssicherheit und eine große Netzkapazität gewährleistet.

Durch eine Auswahl von gespeicherten Daten wird auch der Aufwand für ihre Aktualisierung und somit eine Belastung des Netzwerkes wesentlich verringert.

Das erfindungsgemäße Verfahren ermöglicht somit jedem Benutzer, insbesondere auch jedem Privatkunden, seine Telefonkosten individuell zu optimieren. Des weiteren erfolgt das erfindungsgemäße Verfahren in vorteilhafter Weise ohne daß es einen Eingriff in eine bestehende Netzarchitektur erfordert.

Die Erfindung betrifft ferner einen Router für eine Auswahl von Übertragungswegen für Telefongespräche, die von einem Telefon und/oder einer Telefonanlage ausgehen, der sich dadurch auszeichnet, dass das Telefon und/oder die Telefonanlage ein Mittel zur Auswahl des günstigsten Netzanbieters enthalten und dass das Mittel mindestens eine Teilmenge von in einem Servicezentrum gespeicherten Entfernungs- und/oder Tarifdaten von Netzbetreibern enthält.

Die Erfindung betrifft ferner ein Telefon, das sich dadurch auszeichnet, dass es einen erfindungsgemäßen Router enthält.

Die Erfindung betrifft ferner eine Telefonanlage, die sich dadurch auszeichnet, dass sie einen erfindungsgemäßen Router enthält.

Vorteilhafte Ausführungsformen und zweckmäßige Weiterbildungen der Erfindung werden durch die Ansprüche 2 bis 18 und 20 erzielt.

Eine bevorzugte Ausführungsform des Verfahrens, des Routers, des Telefons und der Telefonanlage zeichnet sich dadurch aus, dass bei einer ersten Inbetriebnahme des Telefons und/oder der Telefonanlage eine Konfigurierung erfolgt.

Die Erfindung bezieht sich sowohl auf Telefone und Telefonanlagen für das Festnetz als auch auf Mobiltelefone.

Eine bevorzugte Ausführungsform des Verfahrens, des Routers, des Telefons und der Telefonanlage zeichnet sich dadurch aus, dass das Telefon und/oder die Telefonanlage vor der Konfigurierung eine Verbindung zu dem Servicezentrum (S) herstellt.

Eine bevorzugte Ausführungsform des Verfahrens, des Routers, des Telefons und der Telefonanlage zeichnet sich dadurch aus, dass aus dem Servicezentrum (S) Tarifdaten ausgewählt und an das Telefon und/oder die Telefonanlage übermittelt werden.

Eine bevorzugte Ausführungsform des Verfahrens, des Routers, des Telefons und der Telefonanlage zeichnet sich dadurch aus, dass die Tarifdaten in einem Tarifmodul gespeichert werden.

Das Tarifmodul kann beispielsweise in dem Telefon oder in der Telefonanlage angeordnet sein.

Das Tarifmodul enthält eine Auswahl der Daten, die sich in der Datenbank des Service-Zentrums befinden. Das Tarifmodul erfordert daher verhältnismäßig wenig Speicherplatz, so dass es problemlos in das Telefon und/oder die Telefonanlage integriert werden kann. Auch bei Mobiltelefonen ist somit eine Speicherung der Tarifdaten mit geringem Aufwand möglich.

Eine bevorzugte Ausführungsform des Verfahrens, des Routers, des Telefons und der Telefonanlage zeichnet sich dadurch aus, dass Netzwerkvorwahlen von Anbietern mit ausgewählten Tarifdaten aus dem Servicezentrum (S) ausgelesen und an das Telefon und/oder die Telefonanlage übermittelt werden.

Eine bevorzugte Ausführungsform des Verfahrens, des Routers, des Telefons und der Telefonanlage zeichnet sich dadurch aus, dass eine Aktualisierung von Tarifdaten durch eine Übermittlung an das Telefon und/oder die Telefonanlage erfolgt.

Eine bevorzugte Ausführungsform des Verfahrens, des Routers, des Telefons und der Telefonanlage zeichnet sich dadurch aus, dass eine Aktualisierung für ausgewählte Tarifdaten erfolgt.

Eine bevorzugte Ausführungsform des Verfahrens, des Routers, des Telefons und der Telefonanlage zeichnet sich dadurch aus, dass die Tarifdaten von einem Benutzer des Telefons und/oder der Telefonanlage ausgewählt werden.

Eine bevorzugte Ausführungsform des Verfahrens, des Routers, des Telefons und der Telefonanlage zeichnet sich dadurch aus, dass eine Datenübertragung zwischen dem Telefon und/oder der Telefonanlage einerseits und dem Servicezentrum andererseits über eine Telefonleitung erfolgt.

Eine bevorzugte Ausführungsform des Verfahrens, des Routers, des Telefons und der Telefonanlage zeichnet sich dadurch aus, dass nach Abschluß der Übertragung der Daten die Verbindung zwischen dem Telefon und dem Servicezentrum beendet wird.

Eine bevorzugte Ausführungsform des Verfahrens, des Routers, des Telefons und der Telefonanlage zeichnet sich dadurch aus, dass während oder nach Eingabe einer Vorwahlnummer Tarifentfernungen zu dieser Vorwahl für verschiedene Anbieter ermittelt werden.

Eine bevorzugte Ausführungsform des Verfahrens, des Routers, des Telefons und der Telefonanlage zeichnet sich dadurch aus, dass in Abhängigkeit von der Tarifentfernung und eines Datums und/oder einer Uhrzeit eine Gebühr pro Zeiteinheit für verschiedene Anbieter ermittelt wird.

Eine bevorzugte Ausführungsform des Verfahrens, des Routers, des Telefons und der Telefonanlage zeichnet sich dadurch aus, dass eine Netzvorwahl für den günstigsten Anbieter der Vorwahl vorangestellt wird.

Eine bevorzugte Ausführungsform des Verfahrens, des Routers, des Telefons und der Telefonanlage zeichnet sich dadurch aus, dass der Übertragungsweg für das Telefongespräch nach einer Prioritätenliste ausgewählt wird.

Eine bevorzugte Ausführungsform des Verfahrens, des Routers, des Telefons und der Telefonanlage zeichnet sich dadurch aus, dass überprüft wird, ob der Übertragungsweg besetzt ist und daß falls der Übertragungsweg besetzt ist für das Telefongespräch ein anderer Übertragungsweg mit einer nach der Prioritätenliste geringeren Priorität ausgewählt wird.

Weitere Vorteile, Besonderheiten und zweckmäßige Weiterbildungen der Erfindung ergeben sich aus den Unteransprüchen und der nachfolgenden Darstellung eines bevorzugten Ausführungsbeispiels der Erfindung anhand der Figur.

Die Figur zeigt in einer schematischen Darstellung eine Telefonanlage und ein Telekommunikationsnetz, mit dem sie verbunden ist.

Die Figur zeigt ein Telefon A, das ein Optimierungsmittel AS sowie ein Entfernungsmodul AE enthält und das mit einer Telefontastatur AT versehen ist.

Das Telefon A ist mit einem Netzwerk verbunden.

Das Optimierungsmittel AS, das beispielsweise unter Einsatz von geeigneter Software realisiert ist, ermöglicht einem Nutzer eine völlig transparente Nutzung der Erfindung. Der Nutzer gibt - wie bei einem herkömmlichen Telefon - lediglich die Telefonnummer des Anzurufenden an. Die Software trifft die Entscheidung, in welches Netz einzuwählen ist.

Das Servicezentrum S hat den Vorteil, dass Änderungen in Tarifstrukturen und Entfernungsdaten zentral verwaltet und dem Nutzer zugeführt werden können.

Vorzugsweise wird ein Telefonkostenoptimierungssystem (TEKOPS) mit den folgenden Funktionen bereitgestellt:
1. Konfigurierung bei erster Inbetriebnahme am neuen Standort
2. Aktualisierung der Tarifdaten
3. Hilfefunktion im Servicezentrum S
4. Optimierungsfunktion im Telefon A

Nachfolgend werden bevorzugte Ausführungsformen der Funktionen dargestellt:

### 1. Konfigurierung bei erster Inbetriebnahme am neuen Standort

Vom Telefon A, das das Optimierungsmittel AS enthält, wird das Servicezentrum S angewählt. Zuerst gelangt der Nutzer in ein Auswahlmenü SM eines Telefon-Computers. Durch Tastendruck - z. B. 〈1〉 - entscheidet der sich für einen Menüpunkt wie "Konfigurierung bei erster Inbetriebnahme am neuen Standort". Nun wird unter Einsatz des Auswahlmenüs SM eine Ortsnetzkennzahl K des Teilnehmers A abgefragt. Für ein Mobilfunkgerät ist die Ortsnetzkennzahl K gleich der Netzkennummer (z. B. 0171 für einen ersten Service-Anbieter und 0172 für einen zweiten Service-Anbieter). Die Ortsnetzkennzahl K des Teilnehmers A wird über die Telefontastatur AT des Telefons A eingegeben oder, beispielsweise bei einer ISDN Verbindung, einem Protokoll entnommen.

Aufgrund dieser Information ermittelt das Entfernungsmodul AE die individuellen Entfernungsdaten für den Anschluß A. Die Entfernungsdaten werden an das Telefon A übermittelt und dort in einem Entfernungsmodul AE angelegt.

Anschließend wird ein Tarifmodul ST durchlaufen. Das Tarifmodul ST enthält alle verfügbaren Tarife aller Anbieter, einschließlich von Tarifen von Call-by-Call Diensten. Hier kann der Nutzer seine individuelle Tarif- und Netzwerkanbieter-Auswahl treffen. Im ersten Schritt wird der eigene Tarif im Heimatnetzwerk angegeben, um diesen immer als Referenz zu den Call-by-Call Tarifen zu gebrauchen. Dann werden von dem Nutzer Anbieter ausgewählt, deren Call-by-Call Dienste er nutzen will. Die Auswahl kann entweder über ein sprachgesteuertes Menü erfolgen oder, um dem Nutzer eine günstigere Alternative zu bieten, über einen Zahlencode. Die Zusammensetzung des Zahlencodes kann in einer Betriebsanleitung des Telefons, per Newsletter, E-mail, Internet-Page oder anderen Medien bekannt gemacht werden. Beispielsweise kann ein Code 3460 bedeuten, daß ein Tarif 3 eines Anbieters 1 (1. Ziffer), ein Tarif 4 eines Anbieters 2 und ein Tarif 6 eines Anbieters 3 beachtet werden, während ein Anbieter 4 nicht zur Optimierung herangezogen wird (Ziffer 4 = 0). So werden Tarifdaten ausgewählt. Die ausgewählten Tarifdaten werden an das Telefon A übermittelt und dort in dem Tarifmodul ST gespeichert.

Danach wird das Netzwerkvorwahlmodul SV durchlaufen. Hier werden die Networkvorwahlen der ausgewählten Anbieter aufgesucht und an Telefon A übermittelt. In A werden die Netzvorwahlen in den Tarifmodulen AT abgelegt.

Nach Abschluß der Datenübertragung wird die Verbindung vom Telefon A zum Servicezentrum S von S aus abgebrochen, um unnötige Telefonkosten zu vermeiden.

### 2. Aktualisierung der Tarifdaten

Vom Telefon A, das das Optimierungsmittel AS enthält, wird das Servicezentrum S angewählt. Zuerst gelangt man in das Auswahlmenü des Telefon-Computers SM. Durch Tastendruck - z. B. 〈2〉 - entscheidet man sich für den Menüpunkt "Aktualisierung der Tarifdaten".

Dadurch wird das Tarifmodul ST angesprochen. Hier kann der Nutzer seine individuelle Tarif- und Netzwerkanbieter-Auswahl treffen. Die Auswahl kann entweder über ein sprachgesteuertes Menü erfolgen oder über einen Zahlencode. Die ausgewählten Tarifdaten werden an das Telefon A übermittelt und dort in den Tarifmodulen AT abgespeichert.
Nach Abschluß der Datenübertragung wird die Verbindung vom Telefon A zum Servicezentrum S von S aus abgebrochen, um unnötige Telefonkosten zu vermeiden.

### 3. Hilfefunktion im Servicezentrum S

Von jedem beliebigen Telefon kann das Servicezentrum S angewählt werden. Zuerst gelangt man in das Auswahlmenü SM des Telefon-Computers SM. Durch Tastendruck (z. B. 〈3〉) entscheidet man sich für den Menüpunkt "Hilfefunktion".

Ein Hilfemodul SH wird angesprochen und dem Nutzer werden vorzugsweise menügesteuert Informationen über das Telefon Kosten Optimierungssystem vermittelt.

### 4. Optimierungsfunktion im Telefon A

Der Nutzer gibt die gewünschte Telefonnummer eines Teilnehmers B über das Tastenfeld AT des Telefons A ein und bestätigt die Nummer mit Druck der Taste "Send". Die B-Nummer (z. B. Oxxyy-abc) wird dem Optimierungsmittel AS zugeführt. Es besteht die Möglichkeit, bestimmte B-Nummern von der Optimierung auszunehmen, bzw. direkt irgendwelchen Anbietern zuzuleiten. Dieses ermöglicht eine Nutzung von individuellen Diensten, wie z. B. Frieds & Co., die spezielle Nummern zu einem günstigeren Tarif anbieten. Für die normale Optimierung gelangt die B-Nummer zuerst in das Entfernungsmodul AE. Dort wird aufgrund der Vorwahl (Oxxyy) die Entfernungszone für den jeweiligen Anbieter (xx, xy, ..., zz) ermittelt. Diese Daten werden an die jeweiligen Tarifmodule AT (xx, xy,...,zz) weitergegeben. Die Tarifmodule fragen vom Zeitmodul AZ das Datum und die aktuelle Uhrzeit ab und berechnen jeweils die Gebühr pro Zeiteinheit für diesen individuellen Anruf. Die Gebühr pro Zeiteinheit jedes Anbieters und dessen Netzvorwahl werden an das Entscheidungsmodul AV weitergegeben. Hier wird eine Prioritätenliste erstellt, mittels der beispielsweise die günstigste Alternative ausgewählt (z. B. Anbieter XY ist der günstigste) werden kann. Der Rufnummer wird nun die Netzvorwahl des günstigsten Anbieters vorangestellt (z. B. 010XY-0XXYY-ABC) und an das öffentliche Netz N gesendet.

Es ist besonders vorteilhaft, die erfindungsgemäßen Funktionen wie folgt zu implementieren:

### Hardware:

Die Optimierungsfunktion kann in ein handelsübliches digitales Telefon implementiert werden oder in einer Telefonanlage durch ein Software-Update realisiert werden. Es empfiehlt sich, die Software in einem EEPROM zu speichern, um spätere Updates ohne Hardwareänderung realisieren zu können. Die neue Software-Version sollte über eine Schnittstelle am Telefon A oder durch das Telefonnetz (z. B. vom Service-Zentrum) zu laden sein. Das Servicezentrum kann durch einen SCP (Service Control Point) oder einen Telefoncomputer realisiert werden.

### Software:

Die Optimierungsfunktion kann in derselben Programmiersprache realisiert werden, die im Telefon verwendet wurde. Das Servicezentrum kann bei einer softwaregestützten Implementierung in jeder beliebigen Programmiersprache ausgeführt werden. Die Auswahl der Programmiersprache kann somit von dem Angebot an Telefoncomputern auf dem Markt abhängig gemacht werden.

### Datenübertragung und Protokoll zwischen Telefon A und Servicezentrum Z:

### 1. Konfigurierung bei erster Inbetriebnahme am neuen Standort

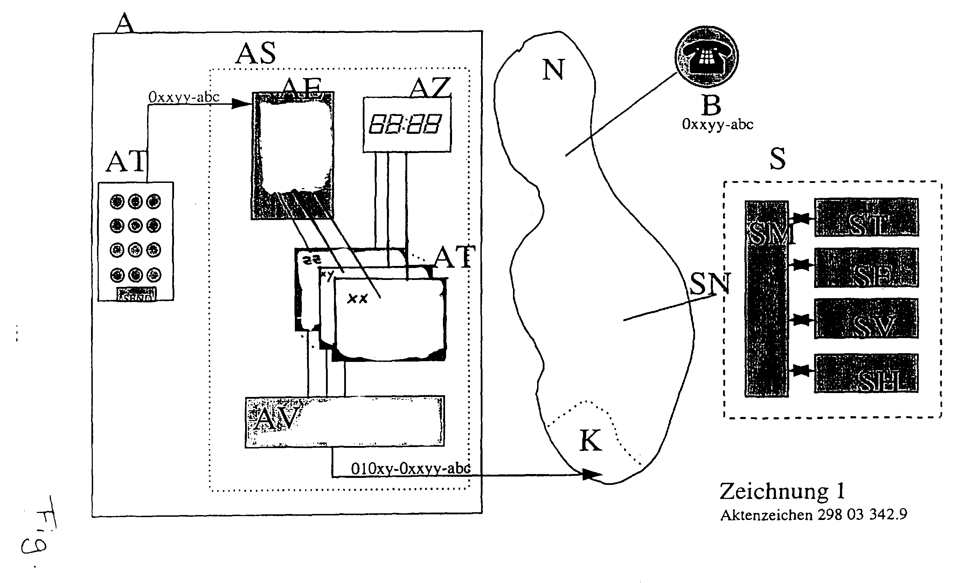

Zuerst wird die eigene Rufnummer des Nutzers von einem Sprachcomputer abgefragt. Die Nummer wird in die Telefontastatur AT eingetippt, im Telefon A selber gespeichert und dann an das Servicezentrum S übertragen. Die Datenübertragung geschieht in Echtzeit. Das Servicezentrum Z speichert ebenfalls die Ortsnetzkennzahl des Anrufers und erstellt den relevanten Datensatz der Entfernungsdaten für den Anrufer. Hierbei kann folgende Technik verwandt werden. Ein beliebiger Anbieter unterteilt seine Entfernungszonen, z. B. in Regional (1, 2,..n), National, Europa (1, 2,..n), International (1, 2,..,n), Mobil (1, 2,..,n), 0180x(1,2,..,n), etc. Die Entfernungszonen werden einem Tarif zugeordnet, z. B. Regional 2=2, Europa 1=6, Mobil 1=9. In dem Telefon A und dem Servicezentrum S wird eine Vorwahlen Matrix/Vektor vordefiniert, die alle möglichen Vorwahlen enthält (00000-09999), also eine 9999x9999-Matrix. In Z ist die komplette Matrix ausgefüllt, d. h. alle Spalten und alle Reihen. In A wird nur die Reihe benötigt, die zur eigenen Rufnummer gehört, d. h. ein Vektor von der Dimension 1 x 9999. Die Matrix in Z ist derart definiert, dass sie den Tarif zwischen jeder beliebigen Rufnummer wiedergibt. Figur 1 gibt ein Beispiel, wobei vom eigenen Standort mit der Vorwahl 02407 folgende Angaben für Anbieter 1 gelten: 0031 = Europal = Tarif 6, 0172 = Mobil 1= Tarif 9,

0221 = Tarif 2, Tarif 0 könnte heißen, dass diese Kombination nicht existiert (eigener Standort unmöglich, Zielvorwahl nicht existent, etc.).

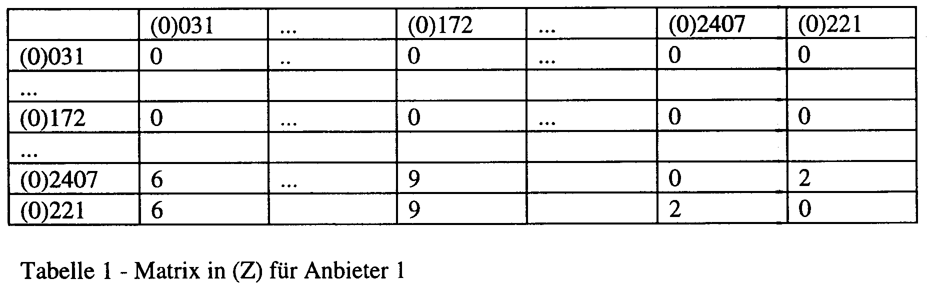

Es wird nun nur der relevante Vektor (Reihe 2407) von Z an A übertragen und in A abgelegt (Figur 2). Für jeden weiteren Anbieter wiederholt sich der Vorgang.

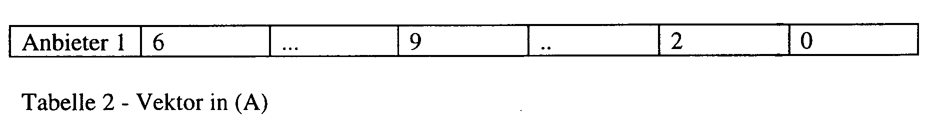

Nun muß den Tarifen ein absoluter Geldbetrag pro Zeiteinheit zugeordnet werden (z. B. Regional2=Tarif2=50Pf./Minute). Diese Angaben sind von der Tageszeit und dem Wochentag oder Datum abhängig. Die Angaben sind in Matrizen in Z abgelegt. An A werden die ausgewählten Matrizen übertragen. Zum Beispiel wird Anbieter 1 und Anbieter 5 ausgewählt, dann werden diese zwei Tarifmatrizen übertragen.

Anschließend müssen noch die Netzvorwahlen der Anbieter von Z an A übertragen werden. In Z wird ein Vektor definiert (Figur 3), der an A übertragen wird.

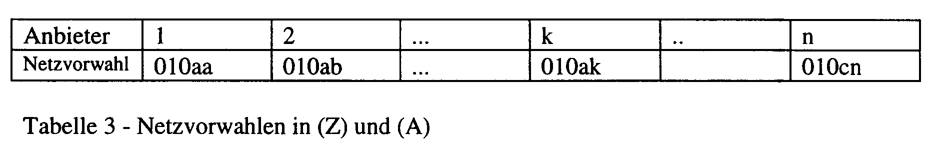

### 2. Aktualisierung der Tarifdaten

Bei Veränderungen in den Tarifdaten wird die Tarifmatrix in Z aufgefrischt. Der Kunde wird über ein Medium seiner Wahl (E-mail, Webseite, Newsletter etc.) benachrichtigt. Der Kunde kann selbst entscheiden, ob er das Update wünscht und dann nur seine relevanten Daten neu anfordern.

### Bezugszeichenliste

- A: Telefon
- AE: Entfernungsmodul
- AS: Optimierungsmittel
- AT: Telefontastatur
- B: Teilnehmer
- K: Ortsnetzkennzahl des Telefons A
- S: Servicezentrum
- SH: Hilfemodul
- SM: Auswahlmenü
- ST: Tarifmodul
- SV: Netzwerkvorwahlmodul

## Patentansprüche

1. Verfahren für ein Routing von wenigstens einem Telefongespräch, **dadurch gekennzeichnet,** dass in Abhängigkeit von einer von einem Anrufer gewählten Nummer eines anzurufenden Telefonanschlusses ein Übertragungsweg für das Telefongespräch ausgewählt wird und dass mittels eines Telefons oder einer mit dem Telefon verbundenen Telekommunikationsanlage durch eine Optimierungsfunktion der günstigste Netzanbieter ausgewählt wird, wobei die Optimierungsfunktion mit Informationen aus einer Datenbank eines Service-Zentrums (S) arbeitet.

2. Verfahren nach Anspruch 1, **dadurch gekennzeichnet,** dass bei einer ersten Inbetriebnahme des Telefons und/oder der Telefonanlage eine Konfigurierung erfolgt.

3. Verfahren nach einem der Ansprüche 1 bis 2, **dadurch gekennzeichnet,** dass das Telefon und/oder die Telefonanlage vor der Konfigurierung eine Verbindung zu dem Servicezentrum (S) herstellt.

4. Verfahren nach Anspruch 3, **dadurch gekennzeichnet,** dass aus dem Servicezentrum (S) Tarifdaten ausgewählt und an das Telefon und/oder die Telefonanlage übermittelt werden.

5. Verfahren nach Anspruch 4, **dadurch gekennzeichnet,** dass die Tarifdaten in einem Tarifmodul gespeichert werden.

6. Verfahren nach einem der Ansprüche 3 bis 5, **dadurch gekennzeichnet,** dass Netzwerkvorwahlen von Anbietern mit ausgewählten Tarifdaten aus dem Servicezentrum (S) ausgelesen und an das Telefon und/oder die Telefonanlage übermittelt werden.

7. Verfahren nach einem der Ansprüche 1 bis 6, **dadurch gekennzeichnet,** dass eine Aktualisierung von Tarifdaten durch eine Übermittlung an das Telefon und/oder die Telefonanlage erfolgt.

8. Verfahren nach Anspruch 7, **dadurch gekennzeichnet,** dass eine Aktualisierung von ausgewählten Tarifdaten erfolgt.

9. Verfahren nach Anspruch 8, **dadurch gekennzeichnet,** dass die Tarifdaten von einem Benutzer des Telefons und/oder der Telefonanlage ausgewählt werden.

10. Verfahren nach einem der Ansprüche 3 bis 9, **dadurch gekennzeichnet,** dass eine Datenübertragung zwischen dem Telefon und/oder der Telefonanlage einerseits und dem Servicezentrum (S) andererseits über eine Telefonleitung erfolgt.

11. Verfahren nach einem der Ansprüche 3 bis 10, **dadurch gekennzeichnet,** dass nach Abschluß der Übertragung der Daten die Verbindung zwischen dem Telefon und dem Servicezentrum (S) beendet wird.

12. Verfahren nach einem der Ansprüche 1 bis 11, **dadurch gekennzeichnet,** dass während oder nach Eingabe einer Vorwahlnummer Tarifentfernungen zu dieser Vorwahl für verschiedene Anbieter ermittelt werden.

13. Verfahren nach Anspruch 12, **dadurch gekennzeichnet,** dass in Abhängigkeit von einer Tarifentfernung und eines Datums und/oder einer Uhrzeit eine Gebühr pro Zeiteinheit für verschiedene Anbieter ermittelt wird.

14. Verfahren nach Anspruch 13, **dadurch gekennzeichnet,** dass eine Netzvorwahl für den günstigsten Anbieter der Vorwahl vorangestellt wird.

15. Verfahren nach einem der Ansprüche 1 bis 14, **dadurch gekennzeichnet,** dass der Übertragungsweg für das Telefongespräch nach einer Prioritätenliste ausgewählt wird.

16. Verfahren nach Anspruch 15, **dadurch gekennzeichnet,** dass überprüft wird, ob der Übertragungsweg besetzt ist und daß falls der Übertragungsweg besetzt ist für das Telefongespräch ein anderer Übertragungsweg mit einer nach der Prioritätenliste geringeren Priorität ausgewählt wird.

17. Router für eine Auswahl von Übertragungswegen für Telefongespräche, die von einem Telefon und/oder einer Telefonanlage ausgehen, **dadurch gekennzeichnet,** dass das Telefon und/oder die Telefonanlage ein Mittel zur Auswahl des günstigsten Netzanbieters enthält und dass das Mittel mindestens eine Teilmenge von in einem Servicezentrum (S) gespeicherten Entfernungs- und/oder Tarifdaten von Netzbetreibern enthält.

18. Router nach Anspruch 17, **dadurch gekennzeichnet,** dass der Router in das Telefon und/oder die Telefonanlage integriert ist.

19. Telefon, **dadurch gekennzeichnet,** dass es einen Router nach einem der Ansprüche 17 oder 18 enthält.

20. Telefonanlage, **dadurch gekennzeichnet,** dass sie einen Router nach einem der Ansprüche 17 oder 18 enthält.
